(19) Europäisches Patentamt
European Patent Office
Office européen des brevets

(11) **EP 3 422 606 B1**

(12) **EUROPEAN PATENT SPECIFICATION**

(45) Date of publication and mention
of the grant of the patent:
**10.11.2021   Bulletin 2021/45**

(51) Int Cl.:
**H04B 10/50** *(2013.01)*   **H04B 10/67** *(2013.01)*

(21) Application number: **17179131.2**

(22) Date of filing: **30.06.2017**

(54) **METHOD OF HANDLING AN OPTICAL SIGNAL IN A RECEIVING DEVICE AND A RECEIVING DEVICE**

VERFAHREN ZUR HANDHABUNG EINES OPTISCHEN SIGNALS IN EINER EMPFANGSVORRICHTUNG UND EMPFANGSVORRICHTUNG

PROCÉDÉ DE MANIPULATION D'UN SIGNAL OPTIQUE DANS UN DISPOSITIF DE RÉCEPTION ET DISPOSITIF DE RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2019   Bulletin 2019/01**

(73) Proprietor: **Nokia Solutions and Networks Oy 02610 Espoo (FI)**

(72) Inventors:
• **Pöhlmann, Wolfgang**
  **70435 Stuttgart (DE)**
• **Borkowski, Robert**
  **70435 Stuttgart (DE)**

(74) Representative: **Louis Pöhlau Lohrentz Patentanwälte Postfach 30 55 90014 Nürnberg (DE)**

(56) References cited:
**US-A1- 2005 271 394     US-A1- 2012 087 655**

• **KOYAMA F ET AL: "GAAIAS/GAAS ACTIVE FILTER BASED ON VERTICAL CAVITY SURFACE EMITTING LASER", ELECTRONICS LETTERS, IEE STEVENAGE, GB, vol. 27, no. 12, 6 June 1991 (1991-06-06), pages 1093-1095, XP000237778, ISSN: 0013-5194**
• **H. GHAFOURI-SHIRAZ: "Distributed feedback laser diodes and optical tunable filters", 2003, WILEY, XP002776267, * Chapter 10 and 11 ***
• **Z. WANG ET AL.: "Distributed feedback laser amplifiers combining the functions of amplifiers and channel filters", APPL. PHYS. LETT., vol. 64, no. 16, 1994, pages 2065-2067, XP002776268,**

EP 3 422 606 B1

**Description**

Field of the invention

The invention relates to communication technology, in particular to an optical network.

Background

A direct modulated laser (DML) is an attractive transmitter for time- and wavelength-division multiplexed passive optical network (TWDM-PON) systems, because it is simple and low-cost. It can be modulated at high bit rates (>10 Gbit/s) and achieve high output power (>+8 dBm).

In direct modulation scheme, the optical signal is generated by varying the current that creates laser emission. This leads to a desired change of the emitted light intensity. The ratio of the power of optical "1" to optical "0" is called the extinction ratio. Besides, due to DML chirp, the optical "1" and optical "0" are emitted at different optical frequencies. The difference between these emission frequencies is caused by the adiabatic chirp (optical frequency change proportional to output power). Since different frequency components of the signal travel at different velocities in an optical fiber, the propagation delays for these components are different. This effectively leads to a distorted received waveform. After fiber transmission, when reaching the receiver, faster signal components ("1" for transmission above zero dispersion wavelength, e.g. in C band) overlap with slower ones ("0") in time domain. Due to the fact that a simple photodiode-based photoreceiver is only responding to intensity of an optical field, disregarding the frequency information, this overlap leads to distortion of a received electrical waveform and thus sensitivity penalty of the receiver. This dispersion-induced distortion is the main limiting factor for optical transmission reach over standard single mode fiber (SMF). Additional to the adiabatic chirp, there is a transient chirp resulting from the transitions between "0" and "1". For this discussion it is considered to be a second-order effect. Therefore, for high extinction ratio (ER>6 dB), the chirp is high and limits the reach of SMF to be below 20 km.

Another disadvantage of a DML appears under burst-mode operation. When the modulation applied to a DML is switched on and off in cycles, the DML is respectively heated by the power during the on cycle, and cooled during the off cycle. Temperature changes in the laser structure lead to a thermally-induced drift of the emitted frequency. This is an additional detrimental effect that superposes with adiabatic chirp. Such drift can easily exceed 100 GHz over a 50% duty cycle in a 125 $\mu$s period (value standard for modern PONs), and depends on the laser structure. This can cause the transmitter wavelength to drift out of a receiver filter.

The usual solution to this problem is to extend the reach of a DML by reduction of the chirp. To do this, the laser current is reduced, which reduces the adiabatic chirp at the expense of reduction of the extinction ratio. The disadvantage of this is that due to the reduced extinction ratio the receiver sensitivity becomes worse. For the same average transmitter power the power budget of the system is thus reduced.

An object of the present invention is to improve the sensitivity of the receiving device and extend the optical transmission reach over standard single mode fiber.

Document US2005271394 A1 discloses an optical transmission system which has a directly modulated laser for modulating data directly on an optical signal, and a narrow band optical filter having a band center frequency offset from a central optical frequency of the optical signal.

Document US2012087655 A1 discloses that an optical filter is connected to receive light output by lasers. The optical filter selectively attenuates light from each of the lasers in the first lasing states thereof and to selectively pass light from each of the lasers in second lasing states thereof.

Document "GaAlAa/GaAs ACTIVE FILTER BASED ON VERTICAL CAVITY SURFACE EMITTING LASER" by Koyama et al. discloses that using DFB lasers as a filter is already a known technique and further discloses an active filter/ amplifier based on the surface emitting laser structure.

Summary of the Invention

The objective of the invention is achieved by the methods and apparatus in the claims.

According to one aspect of the invention, there is provided a method of handling an optical signal in a receiving device in an optical network, comprising steps of: - receiving a first optical signal from a transmitter comprising a first direct modulated laser, the first optical signal comprising a first data in form of optical "1"s and optical "0"s transmitted at different optical frequencies, - filtering the first optical signal with an optical filtering unit, to pass a frequency of the optical "1"s and attenuate a frequency of the optical "0"s, obtaining a second optical signal, - detecting the first data from the second optical signal.

The optical filtering unit comprises a second direct modulated laser, the second direct modulated laser comprising: a laser cavity, an electrical input configured to receive a bias current, and an optical interface configured to receive an input optical signal, and output an output optical signal, wherein, both the input optical signal and the output optical signal on the optical interface of the second direct modulated laser has access to its laser cavity; the method further comprising steps of: - determining the bias current for the second direct modulated laser, so that the frequency of the optical "0"s comprised in the first optical signal is attenuated more than the frequency of the optical "1"s comprised in the first optical signal, when the first optical signal is applied to the optical interface of the second direct modulated laser; - driving the second direct modulated laser with the determined bias current.

The method further comprising a step of: - determining the bias current for the second direct modulated laser, so that the frequency of the optical "1"s comprised in the first optical signal matches with a peak of one side-mode in a spectrum of the second direct modulated laser.

In a preferred embodiment, the method further comprising a step of: - driving the second direct modulated laser with the determined bias current based on a burst timing information of the transmitter.

In a preferred embodiment, the optical filtering unit further comprises at least one third direct modulated laser, the third direct modulated laser comprising: a laser cavity, an electrical input configured to receive a bias current, and an optical interface configured to receive an input optical signal, and output an output optical signal, wherein, both the input optical signal and the output optical signal on the optical interface of the third direct modulated laser has access to its laser cavity; the method further comprising step of: - determining the bias current for the third direct modulated laser, so that the frequency of the optical "0"s comprised in the first optical signal is attenuated more than the frequency of the optical "1"s comprised in the first optical signal, when the first optical signal is applied to the optical interface of the third direct modulated laser; and wherein, the second direct modulated laser and the at least one third direct modulated laser operate alternately in time.

In a preferred embodiment, the bias current of the second direct modulated laser and the bias current of the at least one third direct modulated laser are the same.

In a preferred embodiment, the optical filtering unit further comprises a second optical filter to filter out a frequency emitted by the third direct modulated laser that is corresponding to a main mode in the spectrum of the third direct modulated laser.

In a preferred embodiment, the optical filtering unit further comprises a first optical filter to filter out a frequency emitted by the second direct modulated laser that is corresponding to a main mode in the spectrum of the second direct modulated laser. In a preferred embodiment, the first optical filter and/or the second optical filter are/is further configured to filter an amplified spontaneous emission, ASE, noise.

In a preferred embodiment, the method further comprising step of: - sending an instruction to the transmitter, indicating the transmitter to adjust a laser current of the first direct modulated laser.

According to another aspect of the present invention, there is provided a receiving device for an optical network, comprising: a receiving unit, configured to receive a first optical signal from a transmitter comprising a first direct modulated laser, the first optical signal comprising a first data in form of optical "1"s and optical "0"s transmitted at different optical frequencies; an optical filtering unit, configured to filter the first optical signal, to pass a frequency of the optical "1"s and attenuate a frequency of the optical "0"s, obtaining a second optical signal, a detecting unit, configured to detect the first data from the second optical signal. The optical filtering unit comprises a second direct modulated laser, the second direct modulated laser comprising: a laser cavity, an electrical input configured to receive a bias current, and an optical interface configured to receive an input optical signal, and output an output optical signal, wherein, both the input optical signal and the output optical signal on the optical interface of the second direct modulated laser has access to its laser cavity; the receiving device further comprising: a determining unit, configured to determine the bias current for the second direct modulated laser, so that the frequency of the optical "0"s comprised in the first optical signal is attenuated more than the frequency of the optical "1"s comprised in the first optical signal, when the first optical signal is applied to the optical interface of the second direct modulated laser.

By passing the frequency of the optical "1"s and attenuating the frequency of the optical "0"s, a three-fold benefit is obtained: the extinction ratio of the received signal can be improved, the dispersion penalty can be decreased, and amplified spontaneous emission (ASE) noise can be filtered more tightly. Hence the sensitivity of the receiving device can be significantly improved and the optical transmission reach over standard single mode fiber can be extended.

The present invention is also applicable for burst-mode transmission. Thermally-induced frequency drift on the transmitter side can be compensated by using a direct modulated laser as a filter in the receiving device.

Brief description of the figures

The features and advantages of the invention will be more completely understood by appreciating the following detailed description of preferred embodiments with reference to the figures, wherein

Fig. 1a    depicts a schematic diagram of the power of an exemplary signal transmitted by an optical transmitter in time domain;

Fig. 1b    depicts a schematic diagram of the power of the exemplary signal received by an optical receiver in time domain;

Fig. 2    depicts a schematic block diagram of a receiving device 200;

Fig. 3    depicts a schematic block diagram of a receiving device 300 according to one embodiment of the present invention;

Fig. 4a    depicts a spectrum diagram of a first optical signal;

Fig. 4b    depicts a spectrum diagram of a direct modulated laser;

Fig. 4c    depicts a spectrum of the optical signal on the first optical output of the direct modulated laser;

Fig. 4d depicts an extended view of the filtered receiver signal;

Fig. 5 depicts a schematic block diagram of a receiving device 500 according to another embodiment of the present invention;

Fig. 6 depicts experimental results according to the present invention;

Fig. 7 depicts a schematic block diagram of a receiving device 700 which does not form part of the present invention;

Fig. 8 depicts a schematic block diagram of a receiving device 800 which does not form part of the present invention.

Wherein, same or similar reference numerals refer to same or similar parts or components.

Detailed description

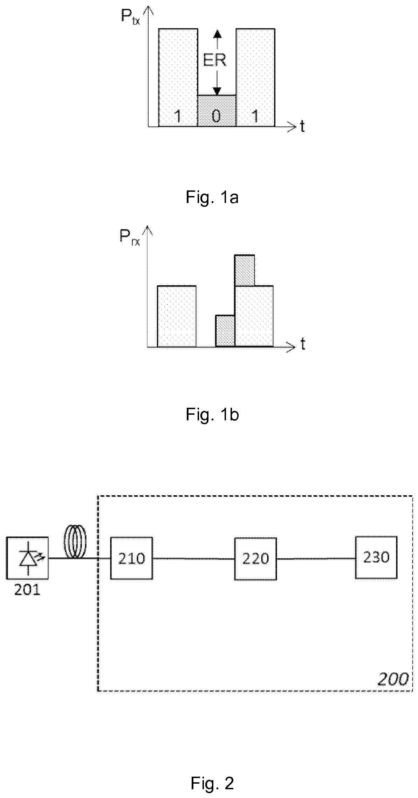

Fig. 1 depicts a schematic diagram showing an influence of a fiber during transmission.

Fig. 1a shows a schematic diagram of the power of an exemplary signal transmitted by an optical transmitter in time domain. The ratio of the power of "1" to "0" is demonstrated as the extinction ratio (ER).

Fig. 1b shows a schematic diagram of the power of the exemplary signal received by an optical receiver in time domain. As can be seen, the optical "0" overlaps with the subsequent optical "1" in the received signal because of the difference in the transmission velocities of the optical "1" and optical "0".

According to the state of the art, in order to reduce the overlap between optical "0" and optical "1", the laser current of the transmitter is reduced, which reduces the adiabatic chirp at the expense of reduction of the extinction ratio. The disadvantage of this is that due to the reduced extinction ratio the receiver sensitivity becomes worse. Therefore, the present invention aims to increase the extinction ratio of the received signal.

Fig. 2 depicts a schematic block diagram of a receiving device 200, which will be elaborated in the following.

The receiving device 200 comprises a receiving unit 210, an optical filtering unit 220, and a detecting unit 230. The receiving device 200 may be implemented in an optical network unit (ONU) to receive downstream signal transmitted by an optical line terminal (OLT), or implemented in an OLT device to receive upstream signal transmitted by an ONU.

The receiving unit 210 is configured to receive a first optical signal from a transmitter comprising a first direct modulated laser 201, the first optical signal comprising a first data in form of optical "1"s and optical "0"s transmitted at different optical frequencies. The first optical signal is transmitted over a standard single mode fiber (SMF). In one embodiment, the receiving unit 210 may further be configured to pre-process the first optical signal, so that the sensitivity of the receiving device can be improved. In another embodiment, the receiving unit 210 may further comprise a diplexer to combine upstream and downstream wavelength bands for transmission in an Optical Distribution Network (ODN).

The optical filtering unit 220 is configured to filter the first optical signal, to pass a frequency of the optical "1"s and attenuate a frequency of the optical "0"s, obtaining a second optical signal. By passing the frequency of the optical "1"s and attenuating the frequency of the optical "0"s, the extinction ratio of the received signal can be improved. Hence the sensitivity of the receiving device can be improved and the optical transmission reach over standard single mode fiber can be extended.

The detecting unit 230 is configured to detect the first data from the second optical signal. In one embodiment, a simple photodiode-based photoreceiver may be used in the detecting unit 230.

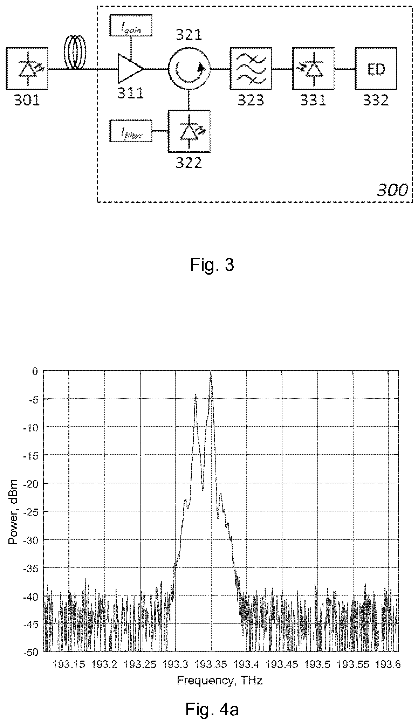

Fig. 3 depicts a schematic block diagram of a receiving device 300 according to one embodiment of the present invention. In the following, an embodiment of the present invention will be elaborated with respect to Fig. 3.

In Fig. 3, the receiving device 300 comprises a semiconductor optical amplifier (SOA) 311, a circulator 321, a second direct modulated laser 322, a first optical filter 323, an avalanche photodiode receiver with a transimpedance amplifier (APD/TIA) 331 and an error detector (ED) 332. The second direct modulated laser 322 comprises: a laser cavity, an electrical input configured to receive a bias current, and an optical interface configured to receive an input optical signal, and output an output optical signal, wherein, both the input optical signal and the output optical signal on the optical interface of the second direct modulated laser 322 have access to its laser cavity. In one embodiment, the second direct modulated laser 322 may be implemented as a normal direct modulated laser without an optical isolator at the output.

Specifically, a first optical signal transmitted by a transmitter comprising a first direct modulated laser 301 is received by the SOA 311 in the receiving device 300. The first optical signal comprising a first data in form of optical "1"s and optical "0"s transmitted at different optical frequencies. The first optical signal is transmitted over a standard single mode fiber (SMF). The SOA 311 is working as a preamplifier to amplify the received optical signal, and its amplification is controlled with the filter gain $I_{gain}$. A skilled person shall understand, the SOA 311 is not essential for the present invention, and the first optical signal may be directly fed to the optical filtering unit.

The output of the SOA 311 is fed to the circulator 321 that directs it to second direct modulated laser 322. The circulator 321, the second direct modulated laser 322, and the first optical filter 323 are configured to filter the first optical signal, to pass a frequency of the optical "1"s and attenuate a frequency of the optical "0"s, obtaining a second optical signal. In the embodiment shown in Fig.3, the second direct modulated laser 322 is used as a filter laser.

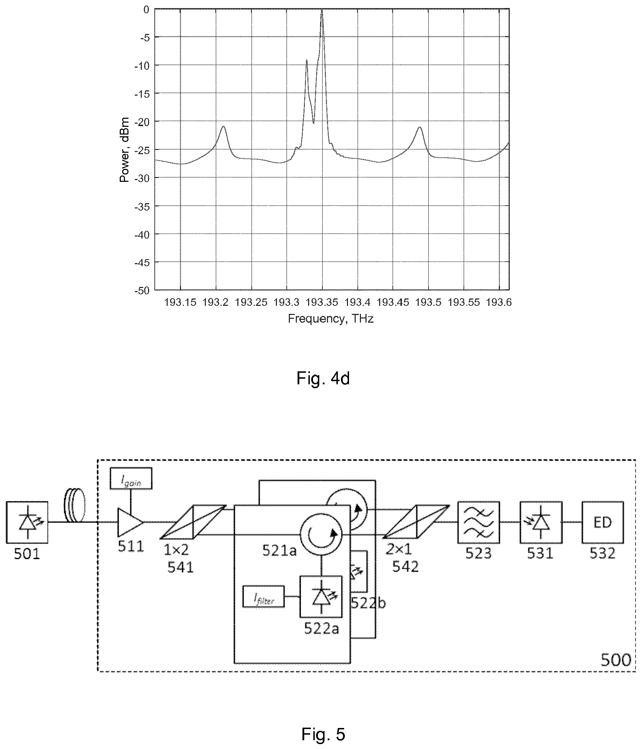

The APD/TIA 331 and the error detector 332 are configured to detect the first data from the second optical signal. The detection may be carried out according to any known technology or any technology developed in the future. Hence, the detailed description of the detection will be omitted here. A skilled person shall understand, in the embodiment shown in Fig.3 and the subsequent Figs 5, 7 and 8, the error detector can be omitted.

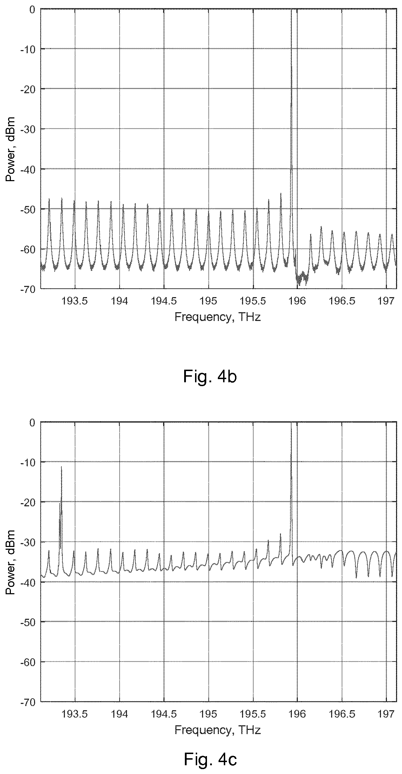

Fig. 4 explains the working mechanism of a direct modulated laser without an optical isolator at the output used as a filter laser.

Fig. 4a shows a spectrum diagram of a first optical signal. As can be seen, there are two peaks on the spectrum of the first optical signal, the frequency of the higher peak corresponds to the frequency of the optical "1"s comprised in the first optical signal, the frequency of the lower peak corresponds to the frequency of the optical "0"s comprised in the first optical signal. The power difference between the two peaks (about 4.3 dB) corresponds to the extinction ratio of the first optical signal. The frequency difference between the two peaks (about 22 GHz) results from adiabatic chirp.

Fig. 4b shows the spectrum of the direct modulated laser in normal laser operation.

Normally, a direct modulated laser comprises: a laser cavity, an electrical input configured to receive a bias current $I_{fliter}$, an optical interface configured to receive an input optical signal, and output an output optical signal. Without an optical isolator at the output, both the input optical signal and the output optical signal on the optical interface of the direct modulated laser have access to its laser cavity.

As can be seen from Fig. 4b, there is a peak with the maximum power (referred to as main mode at about 195.59THz) and a plurality of peaks with lower power values (referred to as side modes).

Main mode of a single-mode laser is the oscillation frequency supported by the laser at which the power spectral density of the emitted light is the global maximum. Side modes of a single-mode laser are oscillation frequencies (apart from the main mode) at which power spectral density exhibits local maxima.

One of the mechanism through which periodic side modes are formed in a DFB (as seen in Fig. 4b) is due to formation of a Fabry-Perot (FP) cavity by two cleaved facets of the laser. Spectrum asymmetry may arise from a gain suppression effect and/or a chirped grating due to a variation of waveguide parameters. [S. Akiba et al., "Distributed Feedback InGaAsP/InP Lasers with Window Region Emitting at 1.5 μm Range," IEEE J. Quantum Electron., 19(6), pp. 1052-1056 (1983)]. In above threshold operation, laser medium gain further reshapes side modes by reducing their linewidth (bandwidth of such created filter becomes smaller). Since externally injected light will be travelling within the same medium, geometry, etc., as the emitted laser light, both will be experiencing the same transfer function. This transfer function may be characterized by observing the spectrum of the laser without an externally injected signal (the source of the light - externally injected or generated within the DFB active region - does not matter for transfer function characterization), and can be characterized similarly to a transfer function of an FP resonator using, among others, free spectral range FSR and finesse F. Each side modes differs slightly due to device imperfections, but for the side modes used in the experiment (cf. Fig. 4d), the following parameters were noted in above-threshold operation: FSR=140 GHz, F=7. All in all, disregarding the main mode, the DFB can be considered as a broad periodic filter. By injecting a signal at a wavelength coinciding with one of the side modes, the signal can be filtered with a filter function corresponding to a shape of that side model.

In Fig.4b the filter laser is driven by a bias current $I_{fliter}$ on its electrical input, the bias current $I_{fliter}$ being determined so that the filter laser is operated above the threshold of the laser to obtain higher finesse of the side modes.

In one embodiment, the bias current $I_{fliter}$ for the second direct modulated laser 322 is determined, so that the frequency of the optical "1"s comprised in the first optical signal matches with one of the side-modes in the spectrum of the second direct modulated laser 322.

A skilled person shall understand, the frequency of the optical "1"s does not have to match exactly with one of the side-modes in the spectrum of the second direct modulated laser 322, a small deviation is acceptable. The sensitivity of the receiving device 300 can be improved if the frequency of the optical "0"s comprised in the first optical signal is attenuated more than the frequency of the optical "1"s comprised in the first optical signal, when the first optical signal is applied to the optical interface of the second direct modulated laser 322. Even if the amplitude of the "1"s decreases, the decrease of amplitude at this part of the receiver will lead only to a minor penalty in Rx sensitivity, because the sensitivity is mainly determined at the input of the SOA 311 and the ASE filter bandwidth.

In one embodiment, the bias current $I_{fliter}$ of the second direct modulated laser 322 is determined so that

$$f_{n-1} < f_{n-1} + \frac{f_n - f_{n-1}}{2} \le f_{"0"} < f_{"1"} \le f_n$$

, wherein, $f_n$ represents the optical frequency of a side mode peak, $f_{n-1}$ represents the optical frequency of a previous side mode peak, $f_{"0"}$ represents the optical frequency of the "0"s comprised in the first optical signal, and $f_{"1"}$ represents the optical frequency of the "1"s comprised in the first optical signal.

Fig. 4c shows the spectrum of the optical signal on the optical interface of the second direct modulated laser 322, when the first optical signal is applied to the optical interface of the second direct modulated laser 322. Besides the frequencies of the optical "1"s and "0"s comprised in the first optical signal near 193.35 THz, there is also an unwanted emission at about 195.59 THz corresponding to the main mode of the second direct modulated laser 322.

Referring to Fig. 3, the optical signal on the optical interface of the second direct modulated laser 322 will be transmitted back to the circulator 321, and then fed to the first optical filter 323.

The first optical filter 323 is configured to filter out the frequency emitted by the second direct modulated laser 322 that is corresponding to a main mode in the spectrum of the second direct modulated laser 322. In one embodiment, the first optical filter 323 is implemented as an optical bandpass filter (OBPF) with a 3 dB bandwidth of 5 nm. In a preferred embodiment, the first optical filter 323 is further configured to filter an ASE noise.

Fig. 4d shows a close-up view of the filtered receiver signal. Comparing to Fig. 4a, it can be seen that the ER has improved from 4.3 dB to about 10 dB.

In another embodiment, in order to make the present invention also applicable for burst-mode transmission, the second direct modulated laser 322 used as filter needs to be able to follow the thermally-induced frequency drift of a transmit-side DML during the burst time. This can be achieved by driving the filter laser with an envelope of the burst signal. Knowing a burst timing information of the transmitter, the envelope of the burst signal is a rectangular signal with an amplitude of the determined bias current.

By properly adjusting the bias current during the off cycle, the drift of the filter laser can be matched to the drift of the transmit laser.

In an embodiment, the second direct modulated laser 322 is driven with the determined bias current based on the burst timing information of the transmitter. A skilled person shall understand, the burst timing information of the transmitter can be obtained according to any known technology or any technology developed in the future.

In another embodiment, the receiving device according to the present invention is applied in an OLT device to receive PON upstream signals. There might be a nearly uninterrupted traffic arriving from different ONUs with only short guard times between the bursts. If even one of the the burst transmitters have a large frequency drift and the receiver filter is thermally tunable (or employs another technology which does not allow for sufficiently fast tuning in any direction), it is possible that the filter laser will not cool sufficiently fast to be able to compensate the next burst. Another situation might be arrival of a next burst at a wavelength considerably different from the current burst, which might necessitate active cooling or heating of the laser, e.g., using a thermoelectric cooler - which is typically orders of magnitude slower than heating due to bias current.

Fig. 5 depicts a schematic block diagram of a receiving device 500 according to one embodiment of the present invention to solve this possible problem.

In Fig. 5, the receiving device 500 comprises a SOA 511, a circulator 521a, a second direct modulated laser 522a, a first optical filter 523, an APD/TIA 531 and an error detector 532. The components that are similar to those described with respect to Fig. 3 will not be elaborated here.

In Fig.5, the optical filtering unit 220 further comprise a third direct modulated laser 522b (located beneath the second direct modulated laser 522a) The third direct modulated laser 522b may be configured similarly as the second direct modulated laser 522a.

The third direct modulated laser 522b comprises a laser cavity, an electrical input configured to receive a bias current, and an optical interface configured to receive an input optical signal, and output an output optical signal, wherein, both the input optical signal and the output optical signal on the optical interface of the third direct modulated laser 522b has access to its laser cavity.

The bias current for the third direct modulated laser 522b may be determined similarly as it is determined for the second direct modulated laser 522a, so that the frequency of the optical "0"s comprised in the first optical signal is attenuated more than the frequency of the optical "1"s comprised in the first optical signal, when the first optical signal is applied to the optical interface of the third direct modulated laser 522b.

In a preferred embodiment, the bias current of the second direct modulated laser 522a and the bias current of the third direct modulated laser 522b are the same.

In additional to Fig. 3, the receiving device 500 in Fig.5 further comprises an optical splitter 541 with a gate array, and a combiner 542, so that the second direct modulated laser 522a and the third direct modulated laser 522b operate alternately in time. A skilled person shall understand that the location of the splitter and combiner is not limited to the given example. In another embodiment, the receiving device may comprise alternatively an optical switch, or a splitter.

In Fig. 3, the second 522a and the third direct modulated laser 522b are connected in parallel. Thereby, the temperature of the second 522a or the third direct modulated laser 522b can be adjusted when it does not receive input optical signal. Thus the temperature of the second 522a and the third direct modulated laser 522b can be controlled within a predefined range, to guarantee the filtering function of the lasers. In another embodiment, the parallel connection of the second direct modulated laser 522a and the third direct modulated laser 522b can be realized using e.g., an SOA gate array.

In another embodiment, the optical filtering unit 220 may comprise two or more third direct modulated laser 522b that are working alternately in time with the second direct modulated laser 522a. In this way, each of the direct modulated lasers may have more time to cool down thereby providing better compensation of the frequency drift. In a preferred embodiment, they may be driven alternately by the same bias current.

Due to the introduction of the third direct modulated laser 522b, there is an unwanted emission of a frequency corresponding to the main mode of the third direct modulated laser 522b. In Fig. 5, the first optical filter 523 is further configured to filter out the frequency emitted by the third direct modulated laser 522b that is corresponding to a main mode in the spectrum of the third direct modulated laser 522b.

In another embodiment, the receiving device 500 may further comprise a second optical filter to filter out the frequency emitted by the third direct modulated laser 522b that is corresponding to a main mode in the spectrum of the third direct modulated laser 522b. In that case, the output optical signal goes through the combiner 542 after the main mode is filtered out in each branch.

If there are two or more third direct modulated lasers, the receiving device 300 may accordingly comprise further second optical filter to filter out the frequency emitted by the further third direct modulated laser that is corresponding to a main mode in the spectrum of the further third direct modulated laser.

In another embodiment, if the frequency corresponding to the main mode of the third direct modulated laser(s) is close to the frequency corresponding to the main mode of the second direct modulated laser 322, the first optical filter 323 may be also used as the second optical filter. In that case, it is not necessary to configure additional optical filter(s). The first optical filter 323 may filter out the unwanted frequency corresponding to the main mode in the spectrum of the second direct modulated laser 322 and the third direct modulated laser.

In another embodiment, the receiving device 200 may further send an instruction to the transmitter, indicating the transmitter to adjust a laser current of the first direct modulated laser 201.

For example, the receiving device 200 may ask the transmitter to reduce the laser current of the first direct modulated laser 201, hence reducing transmit-side ER. This will result in smaller adiabatic and transient chirp. Reduction of adiabatic chirp will in turn decrease the difference in propagation delays between fast "1" and slow "0" signal components which will reduce the overlap between optical "1"s and "0"s in Fig 1b.

By doing so, further improvement of the sensitivity of the receiving device and further extension of the optical transmission reach over standard single mode fiber could be obtained.

A skilled person shall understand, in another embodiment, the sensitivity of the receiving device can also be improved if the receiving device asks the transmitter to increase the laser current of the first direct modulated laser.

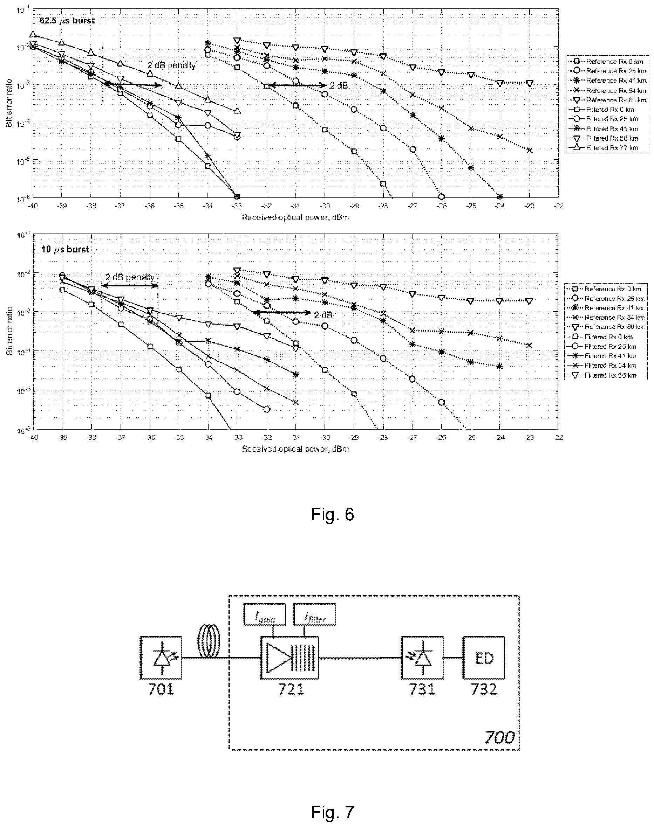

Fig. 6 shows experimental results according to the present invention. It shows that for both continuous operation and burst mode operation, the sensitivity of the receiving device can be improved and the optical transmission reach over standard single mode fiber can be extended according to the present invention.

Specifically, Fig. 6 compares bit error ratios of the received signal as a function of the received optical power for two burst lengths: 62.5 $\mu$s (top) and 10 $\mu$s (bottom), for a reference receiver without filtering (dotted lines) and the proposed filtered receiver (solid lines). Arrows on both plots show a 2 dB sensitivity penalty as measured from the back-to-back (0 km) curves at a BER of $10^{-3}$. It can be seen that for both burst lengths, unfiltered receiver allows only up to 25 km transmission (by considering at most 2 dB sensitivity penalty). By employing filtering in the receiver, the 2-dB-sensitivity-penalty-limited transmission distance is increased to over 66 km. This improvement is due mitigation of the dispersion penalty originating from the extinction ratio improvement.

Measurements also reveal the amplification function of the filter laser. Comparing back-to-back curves yields the following $10^{-3}$ sensitivities. At 62.5 $\mu$s burst length: -32 dBm and -37.5 dBm; at 10 $\mu$s burst length: -32.5 dBm and -37.5 dBm for reference and filtered receivers respectively. The filtered receiver provides up to 5 dB improvement in sensitivity due to amplification and tight ASE filtering of the received signal.

Fig. 7 shows a schematic block diagram of a receiving device 700 which does not form part of the present invention.

The receiving device 700 comprises an avalanche photodiode (APD/TIA) 731 and an electric detector (ED) 732. The components that are similar to those explained with respect to Fig. 3 will not be detailed elaborated here.

In the embodiment shown in Fig. 7, there is a new component 721, combining the function of an SOA and a first tunable filter. The first tunable optical filter is tuned to pass a frequency of the optical "1"s and attenuate a frequency of the optical "0"s.

The implementation shown in Fig. 7 does not require a circulator as described with respect to Fig. 3 or Fig. 5. Instead, the light is passing through the semiconductor device, such as an active laser diode amplifier [H. Ghafouri-Shiraz, "Distributed feedback laser diodes and optical tunable filters," Wiley, Chichester, England (2003); Z. Wang et al., "Distributed feedback laser amplifiers combining the functions of amplifiers and channel filters," Appl. Phys. Lett. 64(16), pp. 2065-2067 (1994)], where the signal experiences amplification and the extinction ratio of the amplified signal is improved by the first tunable dynamic filter.

The receiving device 700 may further comprise a control unit (not shown), configured to determine the filter gain $I_{gain}$, and the current $I_{filter}$ which determines, the central wavelength of the first tunable dynamic filter.

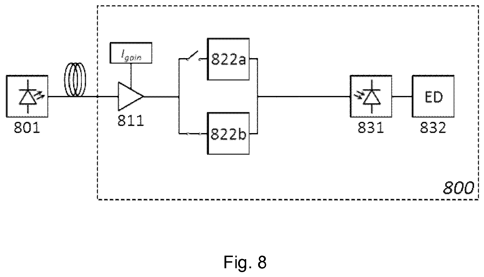

Fig. 8 shows a schematic block diagram of a receiving device 800 which does not form part of the present invention.

In Fig. 8, the receiving device 800 comprises an SOA 811, a first tunable filter 822a, an APD/TIA 831 and an error detector 832. The components that are similar to those described with respect to Fig. 3 and Fig. 7 will not be elaborated here.

The first tunable optical filter 822a may be implemented using any kind of slowly tunable filter, whose tuning speed is not sufficient to tune between consecutive bursts. In the following, the embodiment of the present invention will be described as the first tunable optical filter 822a is implemented as a thermally tunable filter 822a, whose central wavelength is controlled by temperature.

Similar as it is described for Fig.5, in the embodiment where a tunable filter is configured to pass a frequency of the optical "1"s and attenuate a frequency of the optical "0"s, there may also be more than one tunable optical filter working in parallel.

In the embodiment shown in Fig. 8, the optical filtering unit 220 further comprises a second tunable optical filter 822b tuned to pass a frequency of the optical "1"s and attenuate a frequency of the optical "0"s. The receiving device further comprises switches so that the first tunable optical filter 822a and the second tunable optical filter 822b operate alternately in time. The second tunable optical filter 822b is same as the first tunable optical filter 822a, being a thermally tunable filter.

In another embodiment, the optical filtering unit 220 may comprise two or more tunable optical filter 822b that are working alternately in time with the first tunable optical filter 822a. Thereby, the first and second tunable optical filters can be alternately tuned when not operating, to guarantee the filtering function of the filters while in operation.

## Claims

1. A method of handling an optical signal in a receiving device (200) in an optical network, comprising steps of:

   - receiving a first optical signal from a transmitter comprising a first direct modulated laser (201), the first optical signal comprising a first data in form of optical "1"s and optical "0"s transmitted at different optical frequencies,
   - filtering the first optical signal with an optical filtering unit (220), to pass a frequency of the optical "1"s and attenuate a frequency of the optical "0"s, obtaining a second optical signal,
   - detecting the first data from the second optical signal;
   wherein, the optical filtering unit (220) comprises a second direct modulated laser (322),
   the second direct modulated laser (322) comprising: a laser cavity, an electrical input configured to receive a bias current, and an optical interface configured to receive an input optical signal, and output an output optical signal, wherein, both the input optical signal and the output optical signal on the optical interface of the second direct modulated laser (322) has access to its laser cavity;
the method further comprising steps of:

   - determining the bias current for the second direct modulated laser (322), so that the frequency of the optical "0"s comprised in the first optical signal is attenuated more than the frequency of the optical "1"s comprised in the first optical signal, when the first optical signal is applied to the optical interface of the second direct modulated laser (322); wherein the bias current is so determined that the frequency of the optical "1"s comprised in the first optical signal matches with a peak of one side-mode in a spectrum of the second direct modulated laser (322);
   - driving the second direct modulated laser (322) with the determined bias current.

2. A method according to claim 1, the bias current being determined so that the second direct modulated laser (322) is operated above its threshold.

3. A method according to claim 1, the method further comprising a step of:

   - driving the second direct modulated laser (322) with the determined bias current based on a burst timing information of the transmitter.

4. A method according to any one of claims 1-3, wherein, the optical filtering unit (220) further comprises at least one third direct modulated laser (522b),

   the third direct modulated laser (522b) comprising: a laser cavity, an electrical input configured to receive a bias current, and an optical interface configured to receive an input optical signal, and output an output optical signal, wherein, both the input optical signal and the output optical signal on the optical interface of the third direct modulated laser (522b) has access to its laser cavity;
   the method further comprising step of:

   - determining the bias current for the third direct modulated laser(522b), so that the frequency of the optical "0"s comprised in the first optical signal is attenuated more than the frequency of the optical "1"s comprised in the first optical signal, when the first optical signal is applied to the optical interface of the third direct modulated laser (522b);

   and wherein, the second direct modulated laser (522a) and the at least one third direct modulated laser (522b) operate alternately in time.

5. A method according to claim 4, wherein, the bias current of the second direct modulated laser (522a) and the bias current of the at least one third direct modulated laser (522b) are the same.

6. A method according to any one of claims 4-5, wherein, the optical filtering unit (220) further comprises a second optical filter to filter out a frequency emitted by the third direct modulated laser that is corresponding to a main mode in the spectrum of the third direct modulated laser (522b).

7. A method according to any one of claims 1-6, wherein, the optical filtering unit (220) further comprises a first optical filter (323) to filter out a frequency emitted by the second direct modulated laser (322) that is corresponding to a main mode in the spectrum of the second direct modulated laser (322).

8. A method according to claim 6 or 7, wherein, the first optical filter (323) and/or the second optical filter are/is further configured to filter an amplified spontaneous emission, ASE, noise.

9. A method according to claim 1, the method further comprising step of:

- sending an instruction to the transmitter, indicating the transmitter to adjust a laser current of the first direct modulated laser (201).

10. A receiving device (200) for an optical network, comprising:

a receiving unit (210), configured to receive a first optical signal from a transmitter comprising a first direct modulated laser, the first optical signal comprising a first data in form of optical "1"s and optical "0"s transmitted at different optical frequencies;
an optical filtering unit (220), configured to filter the first optical signal, to pass a frequency of the optical "1"s and attenuate a frequency of the optical "0"s, obtaining a second optical signal,
a detecting unit (230), configured to detect the first data from the second optical signal;
wherein, the optical filtering unit (220) comprises a second direct modulated laser (322),
the second direct modulated laser (322) comprising: a laser cavity, an electrical input configured to receive a bias current, and an optical interface configured to receive an input optical signal, and output an output optical signal, wherein, both the input optical signal and the output optical signal on the optical interface of the second direct modulated laser (322) has access to its laser cavity;
the receiving device further comprising:
a determining unit, configured to determine the bias current for the second direct modulated laser (322), so that the frequency of the optical "0"s comprised in the first optical signal is attenuated more than the frequency of the optical "1"s comprised in the first optical signal, when the first optical signal is applied to the optical interface of the second direct modulated laser (322); wherein the bias current is so determined that the frequency of the optical "1"s comprised in the first optical signal matches with a peak of one side-mode in a spectrum of the second direct modulated laser (322).

11. The receiving device (200) according to claim 10, wherein the determining unit is further configured to determine the bias current for the second direct modulated laser (322), so that the second direct modulated laser (322) is operated above its threshold.

**Patentansprüche**

1. Verfahren zur Handhabung eines optischen Signals in einer Empfangsvorrichtung (200) in einem optischen Netzwerk, das die folgenden Schritte umfasst:

- Empfangen eines ersten optischen Signals von einem Sender, der einen ersten direkt modulierten Laser (201) umfasst, wobei das erste optische Signal erste Daten in Form von optischen Einsen und optischen Nullen, die mit verschiedenen optischen Frequenzen übertragen werden, umfasst,
- Filtern des ersten optischen Signals mit einer optischen Filtereinheit (220), um eine Frequenz der optischen Einsen durchzulassen und eine Frequenz der optischen Nullen zu dämpfen, wodurch ein zweites optisches Signal erhalten wird,
- Detektieren der ersten Daten im zweiten optischen Signal;

wobei die optische Filtereinheit (220) einen zweiten direkt modulierten Laser (322) umfasst,
wobei der zweite direkt modulierte Laser (322) Folgendes umfasst: einen Laserresonator, einen elektrischen Eingang, der dazu ausgelegt ist, einen Vorstrom zu empfangen, und eine optische Schnittstelle, die dazu ausgelegt ist, ein optisches Eingangssignal zu empfangen und ein optisches Ausgangssignal auszugeben, wobei sowohl das optische Eingangssignal als auch das optische Ausgangssignal an der optischen Schnittstelle des zweiten direkt modulierten Lasers (322) Zugang zu dessen Laserresonator hat;

wobei das Verfahren ferner die folgenden Schritte umfasst:

- Bestimmen des Vorstroms für den zweiten direkt modulierten Laser (322) derart, dass die Frequenz der optischen Nullen, die im ersten optischen Signal umfasst sind, stärker gedämpft wird als die Frequenz der optischen Einsen, die im ersten optischen Signal umfasst sind, wenn das erste optische Signal an die optische Schnittstelle des zweiten direkt modulierten Lasers (322) angelegt wird; wobei der Vorstrom derart bestimmt wird, dass die Frequenz der optischen Einsen, die im ersten optischen Signal umfasst sind, mit einer Spitze einer Seitenmode eines Spektrums des zweiten direkt modulierten Lasers (322) übereinstimmt;
- Ansteuern des zweiten direkt modulierten Lasers (322) mit dem bestimmten Vorstrom.

2. Verfahren nach Anspruch 1, wobei der Vorstrom derart bestimmt wird, dass der zweite direkt modulierte Laser (322) über seinem Schwellwert betrieben wird.

3. Verfahren nach Anspruch 1, wobei das Verfahren ferner den folgenden Schritt umfasst:

- Ansteuern des zweiten direkt modulierten Lasers (322) mit dem bestimmten Vorstrom auf Basis von Bursttiminginformationen des Senders.

4. Verfahren nach einem der Ansprüche 1 bis 3, wobei die optische Filtereinheit (220) ferner mindestens einen dritten direkt modulierten Laser (522b) umfasst,

wobei der dritte direkt modulierte Laser (522b) Folgendes umfasst: einen Laserresonator, einen elektrischen Eingang, der dazu ausgelegt ist, einen Vorstrom zu empfangen, und eine optische Schnittstelle, die dazu ausgelegt ist, ein optisches Eingangssignal zu empfangen und ein optisches Ausgangssignal auszugeben, wobei sowohl das optische Eingangssignal als auch das optische Ausgangssignal an der optischen Schnittstelle des dritten direkt modulierten Lasers (522b) Zugang zu dessen Laserresonator hat;
wobei das Verfahren ferner den folgenden Schritt umfasst:

- Bestimmen des Vorstroms für den dritten direkt modulierten Laser (522b) derart, dass die Frequenz der optischen Nullen, die im ersten optischen Signal umfasst sind, stärker gedämpft wird als die Frequenz der optischen Einsen, die im ersten optischen Signal umfasst sind, wenn das erste optische Signal an die optische Schnittstelle des dritten direkt modulierten Lasers (522b) angelegt wird;

und wobei der zweite direkt modulierte Laser (522a) und der mindestens eine dritte direkt modulierte Laser (522b) zeitlich abwechselnd betrieben werden.

5. Verfahren nach Anspruch 4, wobei der Vorstrom des zweiten direkt modulierten Lasers (522a) und der Vorstrom des mindestens einen dritten direkt modulierten Lasers (522b) dieselben sind.

6. Verfahren nach einem der Ansprüche 4 bis 5, wobei die optische Filtereinheit (220) ferner ein zweites optisches Filter umfasst, um eine Frequenz herauszufiltern, die vom dritten direkt modulierten Laser emittiert wird und einem Hauptmodus im Spektrum des dritten direkt modulierten Lasers (522b) entspricht.

7. Verfahren nach einem der Ansprüche 1 bis 6, wobei die optische Filtereinheit (220) ferner ein erstes optisches Filter (323) umfasst, um eine Frequenz herauszufiltern, die vom zweiten direkt modulierten Laser (322) emittiert wird und einem Hauptmodus im Spektrum des zweiten direkt modulierten Lasers (322) entspricht.

8. Verfahren nach Anspruch 6 oder 7, wobei das erste optische Filter (323) und/oder das zweite optische Filter ferner dazu ausgelegt sind/ist, ein verstärktes spontanes Emissions(ASE)-Rauschen zu filtern.

9. Verfahren nach Anspruch 1, wobei das Verfahren ferner den folgenden Schritt umfasst:

- Senden einer Anweisung an den Sender, die dem Sender anzeigt, einen Laserstrom des ersten direkt modulierten Lasers (201) anzupassen.

10. Empfangsvorrichtung (200) für ein optisches Netzwerk, die Folgendes umfasst:

eine Empfangseinheit (210), die dazu ausgelegt ist, ein erstes optisches Signal von einem Sender, der einen ersten direkt modulierten Laser umfasst, zu empfangen, wobei das erste optische Signal erste Daten in Form von optischen Einsen und optischen Nullen, die mit verschiedenen optischen Frequenzen übertragen werden, umfasst;
eine optische Filtereinheit (220), die dazu ausgelegt ist, das erste optische Signal zu filtern, um eine Frequenz der optischen Einsen durchzulassen und eine Frequenz der optischen Nullen zu dämpfen, wodurch ein zweites optisches Signal erhalten wird,

eine Detektionseinheit (230), die dazu ausgelegt ist, die ersten Daten im zweiten optischen Signal zu detektieren;

wobei die optische Filtereinheit (220) einen zweiten direkt modulierten Laser (322) umfasst, wobei der zweite direkt modulierte Laser (322) Folgendes umfasst: einen Laserresonator, einen elektrischen Eingang, der dazu ausgelegt ist, einen Vorstrom zu empfangen, und eine optische Schnittstelle, die dazu ausgelegt ist, ein optisches Eingangssignal zu empfangen und ein optisches Ausgangssignal auszugeben, wobei sowohl das optische Eingangssignal als auch das optische Ausgangssignal an der optischen Schnittstelle des zweiten direkten modulierten Lasers (322) Zugang zu dessen Laserresonator hat;

wobei die Empfangsvorrichtung ferner Folgendes umfasst:

eine Bestimmungseinheit, die dazu ausgelegt ist, den Vorstrom für den zweiten direkt modulierten Laser (322) derart zu bestimmen, dass die Frequenz der optischen Nullen, die im ersten optischen Signal umfasst sind, stärker gedämpft wird als die Frequenz der optischen Einsen, die im ersten optischen Signal umfasst sind, wenn das erste optische Signal an die optische Schnittstelle des zweiten direkt modulierten Lasers (322) angelegt wird; wobei der Vorstrom derart bestimmt wird, dass die Frequenz der optischen Einsen, die im ersten optischen Signal umfasst sind, mit einer Spitze einer Seitenmode eines Spektrums des zweiten direkt modulierten Lasers (322) übereinstimmt;

11. Empfangsvorrichtung (200) nach Anspruch 10, wobei die Bestimmungseinheit ferner dazu ausgelegt ist, den Vorstrom für den zweiten direkt modulierten Laser (322) derart zu bestimmen, dass der zweite direkt modulierte Laser (322) über seinem Schwellwert betrieben wird.

**Revendications**

1. Procédé de manipulation d'un signal optique dans un dispositif de réception (200) sur un réseau optique, comprenant les étapes consistant à :

- recevoir un premier signal optique de la part d'un émetteur comprenant un premier laser modulé direct (201), le premier signal optique comprenant des premières données sous la forme de « 1 » optiques et de « 0 » optiques transmis à différentes fréquences optiques,
- filtrer le premier signal optique avec une unité de filtrage optique (220), afin de faire passer une fréquence des « 1 » optiques et d'atténuer une fréquence des « 0 » optiques, de façon à obtenir un second signal optique,
- détecter les premières données à partir du second signal optique ;

dans lequel l'unité de filtrage optique (220) comprend un second laser modulé direct (322),
le second laser modulé direct (322) comprenant : une cavité de laser, une entrée électrique configurée pour recevoir un courant de polarisation, et une interface optique configurée pour recevoir un signal optique d'entrée, et pour délivrer un signal optique de sortie, dans lequel le signal optique d'entrée et le signal optique de sortie sur l'interface optique du second laser modulé direct (322) ont accès à sa cavité de laser ;

le procédé comprenant en outre les étapes consistant à :

- déterminer le courant de polarisation pour le second laser modulé direct (322), de sorte que la fréquence des « 0 » optiques compris dans le premier signal optique soit atténuée davantage que la fréquence des « 1 » optiques compris dans le premier signal optique, lorsque le premier signal optique est appliqué à l'interface optique du second laser modulé direct (322) ; dans lequel le courant de polarisation est déterminé de sorte que la fréquence des « 1 » optiques compris dans le premier signal optique corresponde à un pic d'un mode latéral sur un spectre du second laser modulé direct (322) ;
- entraîner le second laser modulé direct (322) avec le courant de polarisation déterminé.

2. Procédé selon la revendication 1, le courant de polarisation étant déterminé de sorte que le second laser modulé direct (322) soit déclenché au-dessus de son seuil.

3. Procédé selon la revendication 1, le procédé comprenant en outre une étape consistant à :

- entraîner le second laser modulé direct (322) avec le courant de polarisation déterminé sur la base d"informations de synchronisation de salves de l'émetteur.

4. Procédé selon l'une quelconque des revendications 1 à 3, dans lequel l'unité de filtrage optique (220) comprend en outre au moins un troisième laser modulé direct (522b), le troisième laser modulé direct (522b) comprenant : une cavité de laser, une entrée électrique configurée pour recevoir un courant de polarisation, et une interface optique configurée pour recevoir un signal optique d'entrée, et pour délivrer un signal optique de sortie, dans lequel le signal optique d'entrée et le signal optique de sortie sur l'interface optique du troisième laser modulé direct (522b) ont accès à sa cavité de laser ;

le procédé comprenant en outre une étape consistant à :

- déterminer le courant de polarisation pour le troisième laser modulé direct (522b), de sorte que la fréquence des « 0 » optiques compris dans le premier signal optique soit atténuée davantage que la fréquence des « 1 » optiques compris dans le premier signal optique, lorsque le premier signal optique est appliqué à l'interface optique du troisième laser modulé direct (522b) ;

et dans lequel le second laser modulé direct (522a) et le au moins un troisième laser modulé direct (522b) fonctionnent de manière alternée dans le temps.

5. Procédé selon la revendication 4, dans lequel le courant de polarisation du second laser modulé direct (522a) et le courant de polarisation du au moins un troisième laser modulé direct (522b) sont identiques.

6. Procédé selon l'une quelconque des revendications 4 à 5, dans lequel l'unité de filtrage optique (220) comprend en outre un second filtre optique destiné à filtrer une fréquence émise par le troisième laser modulé direct qui correspond à un mode principal sur le spectre du troisième laser modulé direct (522b).

7. Procédé selon l'une quelconque des revendications 1 à 6, dans lequel l'unité de filtrage optique (220) comprend en outre un premier filtre optique (323) destiné à filtrer une fréquence émise par le second laser modulé direct (322) qui correspond à un mode principal sur le spectre du second laser modulé direct (322).

8. Procédé selon la revendication 6 ou 7, dans lequel le premier filtre optique (323) et/ou le second filtre optique sont/est configuré(s) pour filtrer un bruit d'émission spontanée amplifié, ASE.

9. Procédé selon la revendication 1, le procédé comprenant en outre une étape consistant à :

- envoyer une instruction à l'émetteur, qui indique à l'émetteur d'ajuster un courant de laser du premier laser modulé direct (201).

10. Dispositif de réception (200) destiné à un réseau optique, comprenant :

une unité de réception (210), configurée pour recevoir un premier signal optique de la part d'un émetteur comprenant un premier laser modulé direct, le premier signal optique comprenant des premières données sous la forme de « 1 » optiques et de « 0 » optiques transmis à différentes fréquences optiques ;

une unité de filtrage optique (220), configurée pour filtrer le premier signa optique, pour faire passer une fréquence des « 1 » optiques et pour atténuer une fréquence des « 0 » optiques, de façon à obtenir un second signal optique,

une unité de détection (230), configurée pour détecter les premières données à partir du second signal optique ;

dans lequel l'unité de filtrage optique (220) comprend un second laser modulé direct (322),

le second laser modulé direct (322) comprenant : une cavité de laser, une entrée électrique configurée pour recevoir un courant de polarisation, et une interface optique configurée pour recevoir un signal optique d'entrée, et pour délivrer un signal optique de sortie, dans lequel le signal optique d'entrée et le signal optique de sortie sur l'interface optique du second laser modulé direct (322) ont accès à sa cavité de laser ;

le dispositif de réception comprenant en outre : une unité de détermination, configurée pour déterminer le courant de polarisation pour le second laser modulé direct (322), de sorte que la fréquence des « 0 » optiques compris dans le premier signal optique soit atténuée davantage que la fréquence des « 1 » optiques compris dans le premier signal optique, lorsque le premier signal optique est appliqué à l'interface optique du second laser modulé direct (322) ; dans lequel le courant de polarisation est déterminé de sorte que la fréquence des « 1 » optiques compris dans le premier signal optique corresponde à un pic d'un mode latéral sur un spectre du second laser modulé direct (322).

11. Dispositif de réception (200) selon la revendication 10, dans lequel l'unité de détermination est en outre configurée pour déterminer le courant de polarisation pour le second laser modulé direct (322), de sorte que le second laser modulé direct (322) fonctionne au-dessus de son seuil.

Fig. 1a

Fig. 1b

Fig. 2

Fig. 3

Fig. 4a

Fig. 4b

Fig. 4c

Fig. 4d

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005271394 A1
- US 2012087655 A1

**Non-patent literature cited in the description**

- **KOYAMA.** *GaAlAa/GaAs ACTIVE FILTER BASED ON VERTICAL CAVITY SURFACE EMITTING LASER*
- **S. AKIBA et al.** Distributed Feedback InGaAsP/InP Lasers with Window Region Emitting at 1.5 $\mu$m Range. *IEEE J. Quantum Electron.,* 1983, vol. 19 (6), 1052-1056
- **H. GHAFOURI-SHIRAZ.** Distributed feedback laser diodes and optical tunable filters. Wiley, 2003
- **Z. WANG et al.** Distributed feedback laser amplifiers combining the functions of amplifiers and channel filters. *Appl. Phys. Lett.,* 1994, vol. 64 (16), 2065-2067